# EUROPÄISCHE PATENTSCHRIFT

(11) **EP 1 495 924 B1**
(45) Veröffentlichungstag und Bekanntmachung des Hinweises auf die Patenterteilung: **12.12.2007**
(21) Anmeldenummer: 04010518.1
(22) Anmeldetag: 04.05.2004
(51) Int. Cl.: B60R 21/34, B62D 25/12

(54) **Karosserieteil, insbesondere Fronthaube, für ein Kraftfahrzeug**
Vehicle body part, in particular a bonnet
Partie de carosserie d'un véhicule automobile, en particlier le capot

(30) Priorität: 09.07.2003 DE 10331066
(43) Veröffentlichungstag der Anmeldung: 12.01.2005
(73) Patentinhaber: Dr.Ing. h.c. F. Porsche Aktiengesellschaft, 70435 Stuttgart (DE)
(72) Erfinder: Fleischhacker, Robert, 71106 Magstadt (DE); Grandel, Oliver, 71665 Vaihingen/Enz (DE)

(56) Entgegenhaltungen:
- EP-A- 1 093 980
- DE-A- 10 038 812
- DE-A- 10 059 795
- DE-A- 10 123 479
- DE-A- 10 136 898

## Beschreibung

Bei der Erfindung wird ausgegangen von einem Karosserieteil, insbesondere einer Fronthaube, für ein Kraftfahrzeug, gemäß Oberbegriff des Anspruchs 1.

Die DE 100 38 812 A1 beschreibt ein Karosserieteil nach dem Oberbegriff des Patentanspruchs 1. Es ist als Fronthaube aus einem Ober- und Unterteil zusammengesetzt. Es umfasst ferner ein als separates Bauteil ausgeführtes Verstärkungs-Deformationselement, das als Lamelle mit zwei Lamellenabschnitten realisiert ist. Beide Lamellenabschnitte sind in einem Winkel zueinander gebogen, wobei ein Lamellenabschnitt ein freistehendes Lamellenende bildet.

Ein gattungsbildendes als Fronthaube ausgebildetes Karosserieteil ist der DE 198 46 192 A1 zu entnehmen. Es umfasst ein Ober - und Unterteil, wobei das Oberteil einen Karosserieaußenhautabschnitt darstellt. An dem Oberteil ist das Unterteil befestigt, das mehrere Verstärkungs - Deformationselemente aufweist, die durch an dem Unterteil vorgesehene Rippen gebildet sind, die längs oder quer zur Fahrzeuglängsrichtung ausgerichtet sein können. Die Verstärkungs - Deformationselemente sind im Querschnitt im wesentlichen U - förmig gebogen und über parallel zur Innenseite des Oberteils verlaufende Stege miteinander verbunden, so dass ein Wellblech ähnliches Gebilde vorliegt, das mit den Stegen an der Innenseite des Oberteils anliegt, so dass jedes Verstärkungs - Deformationselement mit dem Oberteil ein geschlossenes Hohlprofil bildet. Diese Hohlprofile dienen hauptsächlich als Verstärkungselemente und werden bei einem Aufprall eines Gegenstandes auf das Oberteil kaum verformt, so dass ein geringer Anteil der Aufprallenergie durch die Verstärkungsrippen in Verformungsarbeit umgewandelt wird. Die Absorption der Aufprallenergie soll wesentlich durch außen liegende Bogenabschnitte der Haube erfolgen. Durch diese Bogenabschnitte ergibt sich jedoch eine relativ große Bauhöhe bzw. Dicke des Karosserieteils.

Aus der DE 199 02 311 A1 ist ferner ein Karosserieteil, insbesondere eine Fronthaube, für ein Kraftfahrzeug bekannt, das neben einem Oberteil und einem Unterteil noch eine dazwischen angeordnete Dämpfungsschicht aufweist, die bei einem Aufprall eines Gegenstandes auf das Oberteil verformt wird und mithin als Deformationselement wirkt. Dieser zumindest drei Schichten umfassende Aufbau ist jedoch aufwändig.

Aufgabe der Erfindung ist es, ein Karosserieteil der eingangs genannten Art anzugeben, das bei einfacher Herstellung in flacher bzw. dünner Bauweise ein gutes Absorptionsvermögen besitzt.

Gelöst wird die Aufgabe mit einem Karosserieteil, welches die in Anspruch 1 genannten Merkmale umfasst. Weitere, die Erfindung ausgestaltende Merkmale sind in den Unteransprüchen angegeben.

Die mit der Erfindung hauptsächlich erzielten Vorteile sind darin zu sehen, dass mit den als Lamellen ausgebildeten Verstärkungs - Deformationselementen einerseits eine genügend große Stützfähigkeit für das Oberteil und damit eine genügende Steifigkeit des Karosserieteils erreicht wird, um dieses gegen im normalen Betrieb des Kraftfahrzeugs auftretenden Beanspruchungen standfest zu machen. Andererseits wird bei geringer Bauhöhe bzw. Dicke des Karosserieteils bei einem Aufprall eines Gegenstandes auf das Karosserieteil Aufprallenergie durch die erfindungsgemäß ausgestalteten Lamellen absorbiert. Dies wird hauptsächlich dadurch erzielt, dass jede Lamelle ein freistehendes Lamellenende aufweist, also ein - im Querschnitt gesehen - offenes Profil als Deformationselement bereitgestellt wird, das einerseits das Oberteil stützt und andererseits bei einer bestimmten Krafteinwirkung verformbar ist. Der zweite Lammelenabschnitt der Lamelle dient somit der Verstärkung des ersten Lamellenabschnitts, steht jedoch mit dem Oberteil nicht direkt in Kontakt und kann verformt werden, ohne das er sich am Oberteil abstützt. Durch die Ausgestaltung des zweiten Lamellenabschnitts wird somit hauptsächlich das Deformations - bzw. Verformungsverhalten der Lamelle bestimmt. Eine besonders einfache Herstellung des Karosserieteils ergibt sich dadurch, dass das Unterteil als Biege - Stanzteil realisiert ist.

Gemäß einem in Anspruch 3 angegebenen Ausführungsbeispiel wird jeder der beiden Lamellenabschnitte durch einen - im Querschnitt gesehen - gerade verlaufenden Lamellenschenkel gebildet, die einen Winkel zueinander einschließen, also einen geknickten Übergangsbereich besitzen. Denkbar wäre es überdies, die Lamelle - im Querschnitt gesehen - als Bogen auszuführen, der ggf. kontinuierlich gebogen verläuft oder lediglich abschnittsweise als Bogen ausgeführt ist, wie dies in alternativen Ausführungsformen nach den Ansprüchen 4 bzw. 5 vorgesehen ist.

Dadurch, dass der zweite Lamellenabschnitt freistehend ist, kann dessen Länge bzw. der mit der Innenseite einzuschließende Winkel variiert werden, wodurch sich Zonen mit unterschiedlichem Deformationsverhalten an dem Karosserieteil ausbilden lassen, wie dies gemäß unterschiedlichen Ausführungsbeispielen nach den Ansprüchen 11 bis 13 angeführt ist.

Die Erfindung wird nachfolgend anhand von Ausführungsbeispielen mit Bezug auf die Zeichnung näher erläutert.

Es zeigen:
- Fig. 1: in einer Perspektive ein Kraftfahrzeug mit einer Fronthaube,
- Fig. 2: eine perspektivische Ansicht auf die Unterseite der Fronthaube nach Fig. 1,
- Fig. 3: eine Schnittdarstellung entlang der Linie III - III in Fig. 2 und
- Fig. 4+5: in Schnittdarstellung die jeweils unterschiedlich stark deformierte Fronthaube.

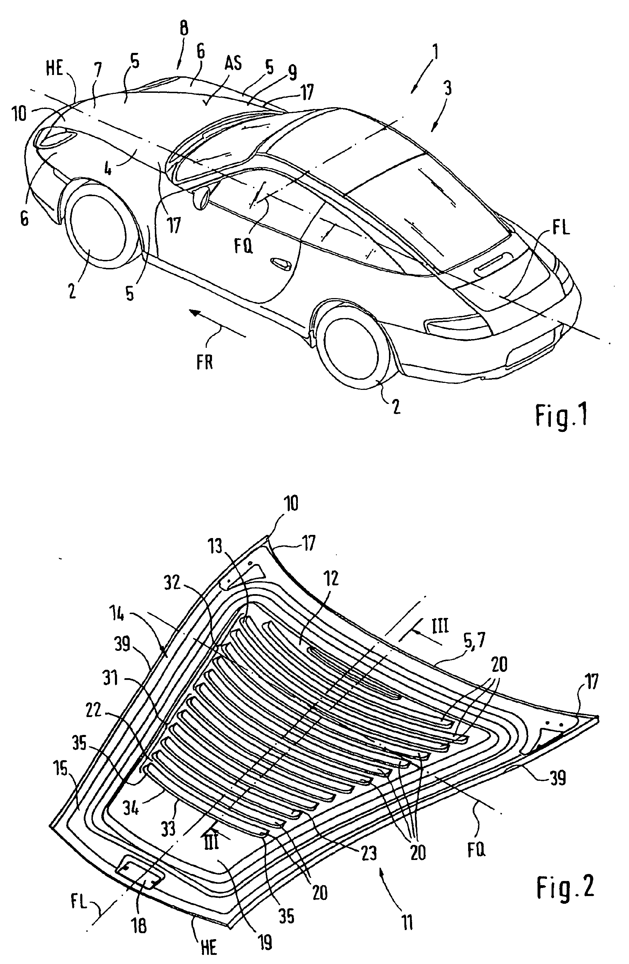

Ein in Fig. 1 dargestelltes Kraftfahrzeug 1, insbesondere Personenwagen, besitzt einen von Rädern 2 zwei getragenen Aufbau 3, der eine Karosserie 4 umfasst, die einen hier nicht zu sehenden Tragrahmen und daran angebrachte äußere Karosserieteile 5 aufweist, wie beispielsweise vordere Kotflügel 6 und eine zwischen den Kotflügeln 6 angeordnete Fronthaube 7. Bei den relevanten Karosserieteilen 5 handelt es sich hauptsächlich um Teile der Frontpartie 8 des Kraftfahrzeugs 1, die Bestandteile der Karosserieaußenhaut 9 sind und bei einem Unfallereignis mit einer Person bzw. Gegenstand in Kontakt kommen.

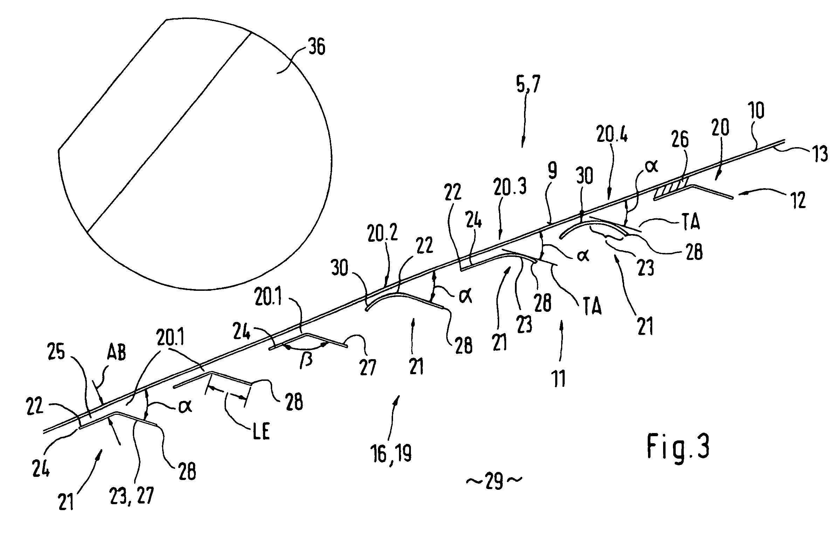

Das zweiteilige Karosserieteil 5 bzw. die im folgenden beispielhaft für die Erfindung beschriebene Fronthaube 7 besitzt ein Oberteil 10, das mit seiner Außenseite AS einen Abschnitt der Karosserieaußenhaut 9 darstellt. Die Haubenunterseite 11 (Fig. 2) liegt einem unter der Fronthaube 7 angeordneten Aufnahmeraum 29 (Fig. 3) zugewandt und wird von einem Unterteil 12 des zweiteiligen Karosserieteils 5 gebildet, wobei das Unterteil 12 an der Innenseite 13 des Oberteils 10 angeordnet bzw. daran befestigt ist. Das Unterteil 12 weist ein im Randbereich 14 der Haube 7 vorgesehenes Verstärkungsprofil 15 auf, das insbesondere im Randbereich 14 umläuft. An dem Verstärkungsprofil 15 sind - in Fahrtrichtung FR gesehen - in hinteren Eckbereichen 17 Konsolen für die Anbindung einer Scharniereinrichtung (nicht dargestellt) vorgesehen. Am - in Fahrtrichtung FR gesehen - vorderen Haubenende HE, etwa mittig, ist eine Befestigungskonsole 18 für ein Schließelement eines hier nicht zu sehenden Haubenschlosses ausgebildet. Das im Randbereich 14 umlaufende Verstärkungsprofil 15 umrandet somit einen innenliegenden Stützabschnitt 19 des Unterteils 12 für das Oberteil 10, welcher Stützabschnitt 19 mit mehreren Verstärkungs - Deformationselementen 20 ausgestattet ist, die nachfolgend lediglich als Deformationselemente 20 bezeichnet werden. Die Deformationselemente 20 können in dem gesamten Stützabschnitt 19 oder lediglich bereichsweise vorgesehen sein. Sie erstrecken sich vorzugsweise in Fahrzeugquerrichtung FQ und verlaufen im wesentlichen parallel zueinander und sind - in Fahrzeuglängsrichtung FL gesehen - hintereinander angeordnet. Die Deformationselemente 20 erstrecken sich ferner entlang der Innenseite 13 des Oberteils 10 und können - anders als in Fig. 2 gezeigt - alternativ oder zusätzlich unter einem Winkel zur Fahrzeuglängsrichtung FL und/oder in Fahrzeuglängsrichtung FL verlaufen.

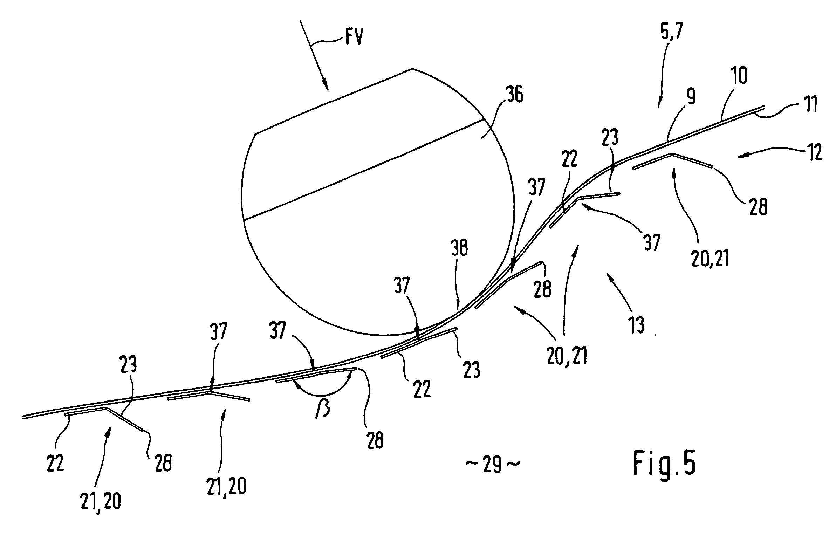

Anhand von Fig. 3 werden die Deformationselemente 20 allgemein und verschiedene Ausführungsbeispiele von Deformationselementen 20.1, 20.2, 20.3 und 20.4 näher erläutert. Überdies sind gleiche bzw. gleichwirkende Teile in Fig. 3, 4 und 5 mit denselben Bezugszeichen wie in den Fig. 1 und 2 versehen; auf deren Beschreibung wird daher verwiesen. Die Deformationselemente 20 sämtlicher Ausführungsbeispiele sind jeweils als Lamelle 21 realisiert, die wenigstens einen ersten Lamellenabschnitt 22 und wenigstens einen zweiten Lamellenabschnitt 23 besitzt. Der erste Lamellenabschnitt 22 liegt benachbart zur Innenseite 13 des Oberteils 10. Bei den Deformationselementen 20.1 und 20.3 verläuft dieser erste Lamellenabschnitt 22 etwa parallel zur Innenseite 13 und bildet - im Querschnitt gesehen - einen etwa geraden Lamellenschenkel 24, der mit Abstand AB zur Innenseite 13 liegen kann, so dass dazwischen ein Zwischenraum 25 gebildet ist, der ggf. mit einer Füllung 26 ausgestattet sein kann. Diese Füllung kann als Abstandhalter bzw. als Klebeschicht ausgeführt sein. Der erste Lamellenabschnitt 24 könnte ggf. auch direkt an der Innenseite 13 anliegen.

Der zweite Lamellenabschnitt 23 ist beim Deformationselement 20.1 (erstes Ausführungsbeispiel) und 20.2 - im Querschnitt gesehen - als gerade verlaufender Lamellenschenkel 27 ausgeführt, der unter einem Winkel α zur Innenseite 13 des Oberteils 10 ausgerichtet ist. Bei entsprechendem Winkel α ist der zweite Lamellenabschnitt 23 weggerichtet von der Innenseite 13 orientiert. Das vom ersten Lamellenabschnitt 22 beabstandet liegende Ende des zweiten Lamellenabschnitts 23 bildet ein freistehendes Lamellenende 28, welches somit in Richtung des unter der Fronthaube 7 liegenden Aufnahmeraums 29 hineinragt, so dass die gerade verlaufenden Lamellenschenkel 24 und 27 einen Winkel β > 0 und < 180° miteinander einschließen.

Bei dem zweiten Ausführungsbeispiel des Deformationselementes 20.2 ist die zugehörige Lamelle 21 mit einem ersten Lamellenabschnitt 22 ausgestattet, der - im Querschnitt gesehen - bogenförmig verläuft und aus dem Bogen 30 heraus in den zweiten Lamellenabschnitt 23 übergeht, der - wie beim vorangegangenen Ausführungsbeispiel - als gerade Lamellenschenkel 27 realisiert ist, der unter dem Winkel α zur Innenseite 13 ausgerichtet ist.

Bei dem dritten in Fig. 3 dargestellten Ausführungsbeispiel des Deformationselements 20.3 ist die Lamelle 21 mit dem ersten Lamellenabschnitt 22 ausgestattet, der als im Querschnitt gerade Lamellenschenkel 24 realisiert ist und in den nunmehr bogenförmig (Bogen 30) verlaufenden zweiten Lamellenabschnitt 23 übergeht, welcher demnach - eine Tangente TA daran angelegt - den Winkel α mit der Innenseite 13 einschließt.

Bei dem vierten Ausführungsbeispiel des Deformationselementes 20.4 ist die gesamte Lamelle 21 mit den Lamellenabschnitten 22 und 23 - im Querschnitt gesehen - als kontinuierlich verlaufender Bogen 30 ausgeführt, bei dem der zweite Lamellenabschnitt 23 bzw. die Tangente TA - wie vorstehend bereits beschrieben - unter dem Winkel α zur Innenseite 13 ausgerichtet ist.

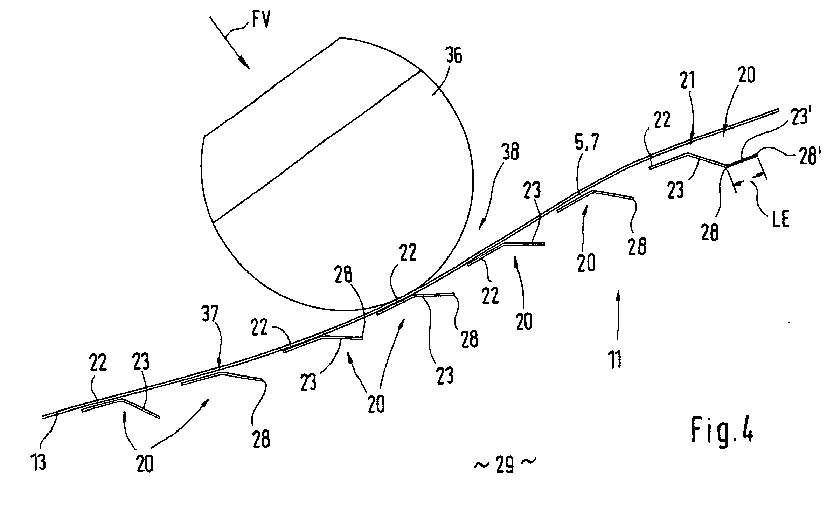

Denkbar wäre es überdies, dass die Lamelle 21 mehr als zwei Lamellenabschnitte 22 und 23 besitzt, so dass zumindest ein weiterer Lamellenabschnitt 23' (Fig. 4) sich an den ersten und/oder zweiten Lamellenabschnitt 22 bzw. 23 anschließt, was nachfolgend beispielhaft für den zweiten Lamellenabschnitt 23 beschrieben ist. Der weitere Lamellenabschnitt 23' schließt sich an das Lamellenende 28 an und besitzt somit das freistehende Lamellenende 28' auf. Der zumindest eine weitere Lamellenabschnitt 23' kann nach einem der vorstehend beschriebenen Ausführungsvarianten für den zweiten Lamellenabschnitt 23 und überdies hinsichtlich der weiter unten beschriebenen Länge LE und des Winkels α wie der zweiten Lamellenabschnitts 23 ausgestaltet sein. Der weitere Lammellenabschnitt 23' kann unter einem beliebigen Winkel zur Innenseite 13 bzw. des zweiten Lamellenabschnitts 23 verlaufen und eine beliebige Länge LE aufweisen. Allen Ausführungsbeispielen der Lamelle 21 bzw. des Deformationselements 20 ist jedoch gemeinsam, dass sie - zusammen mit dem Oberteil 10 betrachtet - eine offenes Querschnittsprofil bilden, also das freistehende Lamellenende 28 bzw. 28' vorgesehen ist, das nicht mit dem Oberteil 10 verbunden ist.

Für unterschiedliche Deformationsverhalten der Deformationselemente 20, 20.1, 20.2, 20.3, und 20.4 kann der Winkel α variiert werden, insbesondere im Bereich > 0 und < 180°, vorzugsweise > 0 und ≤ 90°. Überdies ist eine Variation des Deformationsverhaltens über die Länge LE des zweiten Lamellenabschnitts 23 und ggf. auch über die Länge des ersten Abschnitts 22 möglich. Durch entsprechende Wahl des Winkels α und/oder der Länge LE des zweiten Lamellenabschnitts 23 können unterschiedliche Zonen 31, 32 (Fig. 2) mit unterschiedlichem Deformationsverhalten bereit gestellt werden, wobei beispielsweise die - in Fahrtrichtung FR gesehen - vordere Zone 31 bei einer geringeren Krafteinwirkung verformbar ist. Selbstverständlich können mehr als die beiden dargestellten Zonen 31 und 32 bereit gestellt werden. Denkbar wäre es überdies, die sämtliche Deformationselemente 20 mit demselben Winkel α und derselben Länge LE des zweiten Lamellenabschnitts 23 auszustatten. Innerhalb der Zonen 31 und 32 können verschiedene Ausführungsbeispiele der Deformationselemente 20.1, 20.2, 20.3 und 20.4 verwendet werden. In einer Zone 31 bzw. 32 können mehrere Deformationselemente mit gleicher Länge LE und/oder gleichem Winkel α liegen; alternativ könnten Deformationselemente mit unterschiedlicher Länge und/oder unterschiedlichem Winkel α einer Zone 31 bzw. 32 zugeordnet sein.

Das aus Fig. 2 zu ersehende Unterteil 12 ist in bevorzugter Ausführungsform als einstückiges Formteil, insbesondere Blechteil, realisiert, so dass das Verstärkungsprofil 15 und der Stützabschnitt 19 mit den Deformationselementen 20 einteilig sind, aus welchem Blechteil die zweiten Lamellenabschnitte 23 herausgearbeitet werden können. Hierfür wird in den Stützabschnitt 19 ein U - förmiger Einschnitt 33 beispielsweise durch Stanzen eingebracht, dessen Basis 34 parallel zur Fahrzeugquerrichtung FQ verläuft und dessen beide Schenkel 35 etwa in Fahrzeuglängsrichtung FL verlaufen. Nachdem die U - förmigen Einschnitte 33 eingebracht sind, werden die zweiten Lamellenabschnitte 23 herausgebogen, bis der gewünschte Winkel α erreicht ist. Ober - und Unterteil 10 und 12 können aus Stahlblech, Aluminium, Kunststoff oder aus Sandwichmaterialien gefertigt sein. Eine Mischbauweise aus diesen Werkstoffen ist möglich.

Anhand der Fig. 3, 4 und 5 wird im folgenden die Verformung der Deformationselemente 20 näher erläutert, wenn ein Gegenstand 36 auf das Karosserieteil 5 bzw. die Fronthaube 7 auftrifft. Beim Auftreffen mit einer Kraft FV wird zunächst das Oberteil 10 verformt, bis die ersten Lamellenabschnitte 22 in Kontakt mit der Innenseite 13 des Oberteils 10 kommen. Bei einer weiteren Verformung durch die Kraft FV werden die geknickten bzw. gebogenen Übergangsbereiche 37 zwischen dem ersten und dem zweiten Lamellenabschnitt und die Abschnitte 22 und 23 selbst verformt, d. h. der zweite Lamellenabschnitt 23 mit seinem freien Ende 28 wird in Richtung zur Innenseite 13 zurück gebogen, bis er - im Extremfall - an der Innenseite 13 anliegt und der Winkel β etwa 180° beträgt.

Ausgehend von einem etwa in der Fahrzeuglängsachse FL auftreffenden Gegenstande 36 auf die Fronthaube 7 verformen sich die Deformationselemente 20 vom Auftreffbereich 38 nach beidseitig außen, also in Fahrzeugquerrichtung FQ und in Richtung der Längsseiten 39 des Verstärkungsprofils 15, so dass - ausgehend vom Auftreffbereich 38 - der zweite Lamellenabschnitt 23 nach außen hin zu den Längsseiten 39 fortschreitend zurück gebogen wird. Dadurch wird die aus der Kraft FV resultierende Aufprallenergie insbesondere ohne relevante Kraftspitzen in Verformungsarbeit ungewandelt, wodurch ein günstiger Verzögerungsverlauf des Gegenstandes 36 entstehen kann. Insbesondere für den Fußgängerschutz lassen sich somit die auf den Fußgänger einwirkenden sog. HIC - Werte in gewünschten Wertebereichen halten. Durch geeignete Anordnung der Zonen 31 und 32 mit unterschiedlichem Deformationsverhalten kann somit auf die HIC - Werte bei unterschiedlich großen bzw. unterschiedliche Gewichte aufweisenden Personen Einfluss genommen werden.

## Patentansprüche

1. Karosserieteil (5), insbesondere Fronthaube (7), für ein Kraftfahrzeug (1), mit einem ersten einen Karosserieaußenhautabschnitt bildenden Oberteil (10) und einem an dem Oberteil befestigten Unterteil (12), welches Unterteil mehrere Verstärkungs - Deformationselemente (20, 20.1, 20.2, 20.3, 20.4) aufweist, die sich entlang der dem Unterteil zugewandten Innenseite (13) des Oberteils erstrecken und die jeweils als Lamelle (21) ausgebildet sind, wobei jede Lamelle zumindest einen ersten Lamellenabschnitt (22) besitzt, der benachbart zur Innenseite (13) des Oberteils (10) verläuft, wobei jede Lamelle zumindest einen zweiten Lamellenabschnitt (23) besitzt, der unter einem vorgebbaren Winkel (α) und mit einer vorgebbaren Länge (LE) zur Innenseite (13) des Oberteils (10) verläuft, und wobei ein freies Ende einer der Lamellenabschnitte (22, 23, 23') ein freistehendes Lamellenende (28, 28') bildet, **dadurch gekennzeichnet, dass** das Untereil (12) mit den Lamellen (21) als einstückiges Formteil, insbesondere Blechteil, hergestellt ist und mehrere U-förmige Einschnitte (33) umfasst, von denen jeder jeweils einen der zweiten Lamellenabschnitte (23) begrenzt, und dass die zweiten Lamellenabschnitte (23) jeweils als aus dem Teil herausgebogene Biegeabschnitte realisiert sind.

2. Karosserieteil nach Anspruch 2, **dadurch gekennzeichnet, dass** der zweite Lamellenabschnitt (23) unter dem vorgebbaren Winkel (α) weggerichtet von der Innenseite (13) des Oberteils (10) verläuft.

3. Karosserieteil nach Anspruch 1, **dadurch gekennzeichnet, dass** der erste und zweite Lamellenabschnitt (22, 23) jeweils als - im Querschnitt gesehen - gerade verlaufender Lamellenschenkel (24, 27) ausgebildet sind und dass die Lamellenschenkel (24, 27) einen Winkel (β) zueinander einschließen.

4. Karosserieteil nach Anspruch 1, **dadurch gekennzeichnet, dass** der erste und/oder zweite Lamellenabschnitt (22, 23) - im Querschnitt gesehen - einen Bogen (30) bilden.

5. Karosserieteil nach Anspruch 1, **dadurch gekennzeichnet, dass** die beiden Lamellenabschnitte (22, 23) durch einen bogenförmigen oder geknickten Übergangsbereich (37) miteinander verbunden sind.

6. Karosserieteil nach Anspruch 1 und 3, **dadurch gekennzeichnet, dass** der erste gerade Lamellenschenkel (24) etwa parallel zur Innenseite (13) des Oberteils (10) angeordnet ist.

7. Karosserieteil nach Anspruch 1, **dadurch gekennzeichnet, dass** die Verstärkungs - Deformationselemente (20) parallel zueinander verlaufen.

8. Karosserieteil nach Anspruch 1 oder 7, **dadurch gekennzeichnet, dass** sich die Verstärkungs - Deformationselemente (20) etwa in Fahrzeugquerrichtung (FQ) erstrecken.

9. Karosserieteil nach Anspruch 1, **dadurch gekennzeichnet, dass** das Karosserieteil (5) ein im äußeren Randbereich (14) benachbart zur Innenseite (13) des Oberteils (10) verlaufendes Verstärkungsprofil (15) aufweist.

10. Karosserieteil nach Anspruch 9, **dadurch gekennzeichnet, dass** das Verstärkungsprofil (15) mit dem Unterteil (12) einstückig ausgebildet ist.

11. Karosserieteil nach Anspruch 1, **dadurch gekennzeichnet, dass** - in Fahrzeuglängsrichtung (FL) gesehen - hintereinander liegende Zonen (31, 32) des Karosserieteils (5) unterschiedliches Deformationsverhalten aufweisen.

12. Karosserieteil nach Anspruch 11, **dadurch gekennzeichnet, dass** die Zonen mit unterschiedlichem Deformationsverhalten durch Lamellen (21) mit unterschiedlicher Länge (LE) des zweiten Lamellenabschnitts (23) gebildet sind.

13. Karosserieteil nach Anspruch 11, **dadurch gekennzeichnet, dass** die Zonen (31, 32) mit unterschiedlichem Deformationsverhalten durch Lamellen (21) mit unterschiedlichem Winkel (α) zwischen dem zweiten Lamellenabschnitt (23) und der Innenseite (13) gebildet sind.

14. Karosserieteil nach Anspruch 11, **dadurch gekennzeichnet, dass** die Zonen (31, 32) mit unterschiedlichen Deformationsverhalten durch Lamellen (21) mit unterschiedlicher Länge (LE) des zweiten Lamellenabschnitts (23) und unterschiedlichem Winkel (α) gebildet sind.

15. Karosserieteil nach einem der vorhergehenden Ansprüche, **dadurch gekennzeichnet, dass** der erste Lamellenabschnitt (22) mit Abstand (AB) zur Innenseite (13) des Oberteils (10) liegt und so ein Zwischenraum (25) gebildet ist.

16. Karosserieteil nach Anspruch 15, **dadurch gekennzeichnet, dass** der Zwischenraum (25) mit einer Füllung (26) versehen ist.

17. Karosserieteil nach einem der vorhergehenden Ansprüche, **dadurch gekennzeichnet, dass** die Lamelle (21) einen weiteren Lamellenabschnitt (23') aufweist, der das freistehende Lamellenende (28') besitzt.

## Claims

1. A body part (5), in particular a bonnet (7), for a motor vehicle (1), with a first upper part (10) forming a body outer-skin portion, and a lower part (12) fixed to the upper part, which lower part has a plurality of reinforcing/deformation members (20, 20.1, 20.2, 20.3, 20.4) which extend along the inner surface (13) of the upper part, said inner surface (13) facing the lower part, and which are each formed as a fin (21), wherein each fin has at least one first fin portion (22) extending adjacent to the inner surface (13) of the upper part (10), wherein each fin has at least one second fin portion (23) which has a predeterminable length (LE) and extends at a predeterminable angle (α) to the inner surface (13) of the upper part (10), and wherein a free end of one of the fin portions (22, 23, 23') forms a free-standing fin end (28, 28'), **characterised in that** the lower part (12) with the fins (21) is manufactured as a one-piece shaped part, especially a sheet-metal- part, and comprises a plurality of U-shaped incisions (33), each of which bounds a respective one of the second fin portions (23), and **in that** the second fin portions (23) are each formed as bent portions which are bent out of the part.

2. A body part according to claim 2¹, **characterised in that** the second fin portion (23) extends away from the inner surface (13) of the upper part (10) at the predeterminable angle (α).

3. A body part according to claim 1, **characterised in that** the first and the second fin portion (22, 23) are each formed as straight fin arms (24, 27) - seen in cross-section - and **in that** the fin arms (24, 27) form an angle (β) with one another.

4. A body part according to claim 1, **characterised in that** the first and/or second fin portion (22, 23) - seen in cross-section - form a curve (30).

5. A body part according to claim 1, **characterised in that** the two fin portions (22, 23) are connected to one another by a curved or bent transition region (37).

6. A body part according to claims 1 and 3, **characterised in that** the first straight fin arm (24) is arranged approximately parallel to the inner surface (13) of the upper part (10).

7. A body part according to claim 1, **characterised in that** the reinforcing/deformation members (20) extend parallel to one another.

8. A body part according to claim 1 or 7, **characterised in that** the reinforcing/ deformation members (20) extend approximately in the vehicle transverse direction (FQ).
¹ Error in dependency: this should read "... according to claim 1".

9. A body part according to claim 1, **characterised in that** the body part (5) has a reinforcing profile (15) extending adjacent to the inner surface (13) of the upper part (10) in the outer edge region (14).

10. A body part according to claim 9, **characterised in that** the reinforcing profile (15) is formed in one piece with the lower part (12).

11. A body part according to claim 1, **characterised in that** zones (31, 32) of the body part (5) lie one behind the other when seen in the vehicle longitudinal direction (FL) and have different deformation behaviour.

12. A body part according to claim 11, **characterised in that** the zones with different deformation behaviour are formed by fins (21) with different lengths (LE) of the second fin portion (23).

13. A body part according to claim 11, **characterised in that** the zones (31, 32) with different deformation behaviour are formed by fins (21) with different angles (α) between the second fin portion (23) and the inner surface (13).

14. A body part according to claim 11, **characterised in that** the zones (31, 32) with different deformation behaviour are formed by fins (21) with different lengths (LE) of the second fin portion (23) and different angles (α).

15. A body part according to any one of the preceding claims, **characterised in that** the first fin portion (22) is arranged with spacing (AB) from the inner surface (13) of the upper part (10) so that a gap (25) is formed.

16. A body part according to claim 15, **characterised in that** the gap (25) is provided with a filling (16).

17. A body part according to any one of the preceding claims, **characterised in that** the fin (21) has a further fin portion (23') which is provided with the free-standing fin end (28').

## Revendications

1. Pièce de carrosserie (5), en particulier un capot (7) pour un véhicule automobile (1) avec une première partie supérieure (10) formant un segment de coque de carrosserie et une partie inférieure (12) fixée contre la partie supérieure, ladite partie inférieure comportant plusieurs éléments de renforcement et de déformation (20, 20.1, 20.2, 20.3, 20.4) s'étendant le long de la face intérieure (13) de la partie supérieure opposée à la partie inférieure et réalisés chacun sous forme de lamelle (21), chaque lamelle présentant au moins un premier tronçon de lamelle (22) contigu à la face intérieure (13) de la partie supérieure (10), chaque lamelle présentant au moins un deuxième tronçon de lamelle (23) s'étendant suivant un angle (α) définissable et sur une longueur (LE) définissable par rapport à la face intérieure (13) de la partie supérieure (10), et où une extrémité libre d'un des tronçons de lamelle (22, 23, 23') forme une extrémité de lamelle en porte-à-faux (28, 28'), **caractérisée en ce que** la partie inférieure (12) est fabriquée comme pièce coulée d'un seul tenant avec les lamelles (21), en particulier comme pièce de tôle, et comprend plusieurs encoches en U (33), dont chacune délimite un des deuxièmes tronçons de lamelle (23), et **en ce que** les deuxièmes tronçons de lamelle (23) sont réalisés comme tronçons pliés de la pièce.

2. Pièce de carrosserie selon la revendication 1, **caractérisée en ce que** le deuxième tronçon de lamelle (23) s'étend suivant l'angle (α) prédéterminable depuis la face intérieure (13) de la partie supérieure (10).

3. Pièce de carrosserie selon la revendication 1, **caractérisée en ce que** le premier et le deuxième tronçon de lamelle (22, 23) sont réalisés comme ailes de lamelle droites (24, 27), vus en section transversale, et **en ce que** les ailes de lamelle droites (24, 27) forment un angle (β) entre elles.

4. Pièce de carrosserie selon la revendication 1, **caractérisée en ce que** le premier et/ou le deuxième tronçon de lamelle (22, 23) forment un arc (30), vus en section transversale.

5. Pièce de carrosserie selon la revendication 1, **caractérisée en ce que** les deux tronçons de lamelle (22, 23) sont reliés entre eux par une zone de transition (37) en arc ou coudée.

6. Pièce de carrosserie selon la revendication 1 et la revendication 3, **caractérisée en ce que** la première aile de lamelle droite (24) est sensiblement parallèle à la face intérieure (13) de la partie supérieure (10).

7. Pièce de carrosserie selon la revendication 1, **caractérisée en ce que** les éléments de renforcement et de déformation (20) s'étendent parallèlement entre eux.

8. Pièce de carrosserie selon la revendication 1 ou la revendication 7, **caractérisée en ce que** les éléments de renforcement et de déformation (20) s'étendent sensiblement dans le sens transversal du véhicule (FQ).

9. Pièce de carrosserie selon la revendication 1, **caractérisée en ce que** la pièce de carrosserie (5) présente un profil de renforcement (15) s'étendant dans la zone de bordure extérieure (14), contigu à la face intérieure (13) de la partie supérieure (10).

10. Pièce de carrosserie selon la revendication 9, **caractérisée en ce que** le profil de renforcement (15) est réalisé d'un seul tenant avec la partie inférieure (12).

11. Pièce de carrosserie selon la revendication 1, **caractérisée en ce que** des zones successives (31, 32), dans le sens longitudinal du véhicule (FL), de la pièce de carrosserie (5) présentent des comportements de déformation différenciés.

12. Pièce de carrosserie selon la revendication 11, **caractérisée en ce que** les zones à comportements de déformation différenciés sont formées par des lamelles (21) de longueurs (LE) différentes du deuxième tronçon de lamelle (23).

13. Pièce de carrosserie selon la revendication 11, **caractérisée en ce que** les zones (31, 32) à comportements de déformation différenciés sont formées par des lamelles (21) d'angle (α) différent entre le deuxième tronçon de lamelle (23) et la face intérieure (13).

14. Pièce de carrosserie selon la revendication 11, **caractérisée en ce que** les zones (31, 32) à comportements de déformation différenciés sont formées par des lamelles (21) de longueur (LE) différente pour le deuxième tronçon de lamelle (23) et d'angle (α) différent.

15. Pièce de carrosserie selon l'une des revendications précédentes, **caractérisée en ce que** le premier tronçon de lamelle (22) est disposé à intervalle (AB) de la face intérieure (13) de la partie supérieure (10), un interstice (25) étant ainsi formé.

16. Pièce de carrosserie selon la revendication 15, **caractérisée en ce que** l'interstice (25) est pourvu d'un remplissage (26).

17. Pièce de carrosserie selon l'une des revendications précédentes, **caractérisée en ce que** la lamelle (21) présente un autre tronçon de lamelle (23') pourvu de l'extrémité de lamelle en porte-à-faux (28').
